# FASCICULE DE BREVET EUROPEEN

(11) **EP 1 573 305 B1**
(45) Date de publication et mention de la délivrance du brevet: **16.10.2013**
(21) Numéro de dépôt: 03796167.9
(22) Date de dépôt: 04.12.2003
(51) Int. Cl.: G01N 22/04

(54) **PORTE-ECHANTILLON POUR LA MESURE DU TIRAGE ET DE L'HUMIDITE D'OBJETS POREUX**
PROBENTRÄGER ZUR MESSUNG DES ZUGES UND DER FEUCHTE VON PORÖSEN OBJEKTEN
SAMPLE-HOLDER FOR MEASURING DRAFT AND MOISTURE IN POROUS OBJECTS

(30) Priorité: 18.12.2002 FR 0216254
(43) Date de publication de la demande: 14.09.2005
(73) Titulaire: Hauni Maschinenbau AG, 21033 Hamburg (DE)
(72) Inventeur: CHOLET, Georges, F-45140 Ormes (FR); POULET, Jean-Rémi, F-45400 Fleury Les Aubrais (FR); VERSTICHEL, Gwennael, F-45200 Amilly (FR)
(74) Mandataire: de Saint-Palais, Arnaud Marie
(86) Numéro de dépôt international: PCT/FR2003/003596
(87) Numéro de publication internationale: WO 2004/065948

(56) Documents cités:
- EP-A- 0 967 479
- DE-C- 10 037 180
- US-A- 3 360 721
- US-A- 3 783 373
- US-A- 4 246 774
- US-A- 4 522 214
- US-A- 5 977 780

## Description

La présente invention concerne un porte-échantillon apte à effectuer notamment la mesure du tirage et de l'humidité d'objets poreux tels que des cigarettes ou analogue.

Elle a plus particulièrement pour objet, mais non exclusivement, un porte-échantillon du type susdit pouvant s'intégrer à un module de mesure des caractéristiques de lots de cigarettes et conçu de manière à pouvoir effectuer une séquence de mesures de poids, de tirage, de ventilation filtre, de ventilation papier et de compacité.

Dans une telle séquence, le poids est généralement mesuré au début, tandis que la compacité est mesurée à la fin, étant entendu que cette mesure est destructrice.

Par ailleurs, on sait qu'il est souhaitable, voire même indispensable, de déterminer un paramètre relatif à l'humidité du tabac contenu dans les échantillons :
- Il s'agit, en effet, d'une donnée intéressant le fabriquant de cigarettes qui souhaite connaître l'humidité en sortie de la confectionneuse.
- Le poids et la compacité des cigarettes qui dépendent de l'humidité et doivent être exprimés par rapport à une humidité de référence.

Il s'avère que les dispositifs de mesure d'humidité utilisés jusqu'ici consistent en des modules indépendants qui sont intercalés entre deux des autres modules de la station. Ces dispositifs de mesure peuvent notamment utiliser des cavités à micro-ondes comme cela est divulgué dans la demande de Brevet Européen EP 0 967 479 A.

Or, on constate que la mesure de tirage (intermédiaire) provoque une modification de l'humidité du tabac à cause de l'aspiration d'un débit d'air au travers de la cigarette. En conséquence, l'humidité du tabac de l'échantillon dans le module de mesure du poids et l'humidité du tabac de ce même échantillon dans le module de mesure de la compacité sont donc différentes. En utilisant un seul module d'humidité, on ne pourra mesurer qu'une seule des deux humidités (avant ou après tirage) puisque cette caractéristique est modifiée pendant la mesure de tirage. Ceci entraîne donc des erreurs.

Pour pouvoir éviter ces erreurs, il est nécessaire d'effectuer une mesure d'humidité avant tirage pour déterminer l'humidité réelle et pour corriger le poids puis effectuer ensuite une mesure d'humidité après tirage pour corriger la compacité ce qui conduit normalement à utiliser deux modules de détection d'humidité situés de part et d'autre du module de tirage, Néanmoins, cette solution est chère et encombrante.

L'invention a donc plus particulièrement pour but de supprimer ces inconvénients.

A cet effet, elle propose d'intégrer une cavité hyperfréquence de mesure d'humidité dans une cellule de mesure de tirage d'un porte-échantillon par exemple du type de celle décrite dans le brevet US 4 246 774 A de manière à pouvoir réaliser successivement une mesure de l'humidité avant tirage (qui permet de corriger le poids), puis la mesure de tirage et enfin une seconde mesure d'humidité après tirage pour corriger la compacité en conséquence.

Ainsi, le dispositif selon l'invention pourra comprendre un corps tubulaire comportant :
- un orifice d'accès muni d'un iris permettant de séparer de l'atmosphère le haut de la colonne de tabac, afin de canaliser le débit de ventilation du papier en vue de sa mesure,
- une cavité entourant la colonne de tabac, sur au moins une fraction de sa hauteur, de manière à permettre la détermination du taux d'humidité du tabac par analyse de signaux hyperfréquence, et
- au moins un premier sphincter permettant de maintenir la cigarette en encapsulant sur une longueur normalisée l'extrémité du filtre, pour effectuer les mesures de tirage.

La distance entre l'iris et l'extrémité inférieure du sphincter étant légèrement inférieure à la longueur d'une cigarette.

Avantageusement, le susdit corps pourra comprendre un second sphincter permettant d'encapsuler le filtre à l'opposé du premier sphincter par rapport à une zone de ventilation du filtre, afm de canaliser le débit de ventilation du filtre en vue de sa mesure.

Grâce à ces dispositions, le porte-échantillon peut, à lui seul, effectuer une séquence comprenant successivement les mesures :
- de l'humidité avant tirage (humidité fabrication et humidité pour correction de poids),
- du tirage normalisé TN,
- de la ventilation filtre VF,
- de la ventilation papier VP,
- du tirage ventilation filtre fermé TFE,
- de l'humidité (pour correction ultérieure de la compacité).

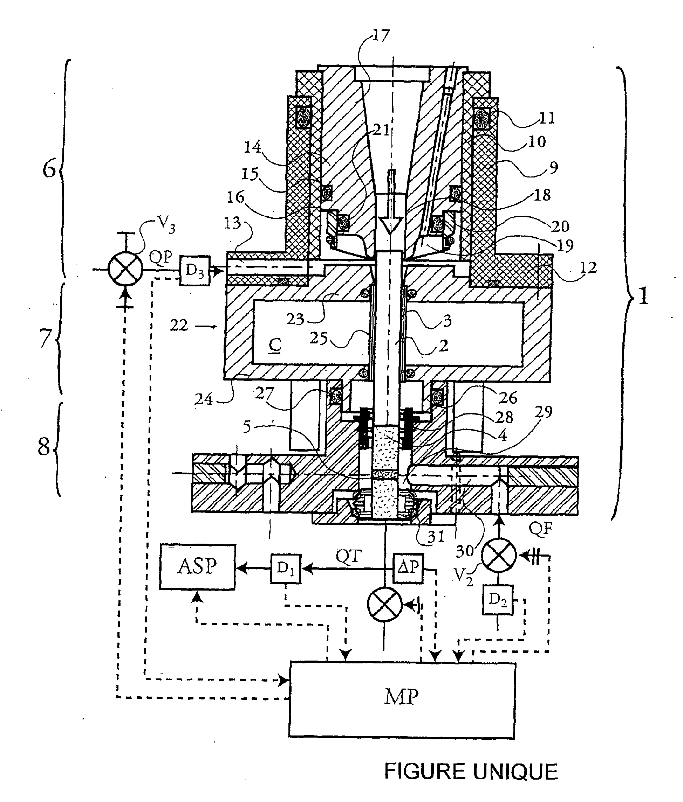

Un mode d'exécution de l'invention sera décrit ci-après, à titre d'exemple non limitatif, avec référence au dessin annexé dans lequel :
La figure unique est une coupe axiale d'un porte-échantillon selon l'invention.

Dans cet exemple, le porte-échantillon 1 est destiné à effectuer des mesures sur des lots de cigarettes dont l'une d'elle, qui se trouve engagée dans le porte-échantillon, comprend, de façon classique, une colonne de tabac 2 contenue dans une enveloppe de papier à cigarette 3 et prolongée d'un côté par un filtre ventilé 4 comprenant, dans sa partie centrale, une zone annulaire de perçages de ventilation 5.

Ce porte-échantillon 1 comprend une structure cylindrique réalisée en trois parties tubulaires 6, 7, 8 assemblées les unes aux autres de façon étanche, à savoir :
a) une première partie qui constitue une trémie et qui comporte :
   - un tube 9 épaulé dans sa partie inférieure,
   - un manchon cylindrique 10 épaulé dans sa partie supérieure qui s'engage avec étanchéité dans le tube épaulé 9, grâce à un joint torique 11, l'épaulement 12 comportant un conduit radial d'écoulement d'air 13 servant à canaliser et à déterminer le débit QP de ventilation papier,
   - un corps de trémie 14 présentant une surface cylindrique extérieure qui s'emboîte de façon étanche (joint torique 15) dans le manchon 10, cette surface cylindrique présentant à sa partie inférieure un étagement de plus petit diamètre 16, suivi d'une extrémité sensiblement tronconique, et une cavité centrale coaxiale comprenant une partie tronconique 17 suivie
   - dans sa partie inférieure d'une partie cylindrique 18 sensiblement au diamètre de la cigarette,
   - un iris 19, monté de façon étanche sur le corps de trémie 14 grâce à une bague cylindrique 20 qui s'engage de façon étanche sur l'étagement 16 (joint torique 21), cet iris 19 comprenant un orifice coaxial présentant, à l'état rétracté, un diamètre légèrement inférieur au diamètre de la cigarette ;
b) une deuxième partie 7 délimitant une cavité hyperfréquence C, cette partie comportant un boîtier cylindrique comprenant une paroi cylindrique 22 partiellement refermée par deux parois circulaires 23, 24 comportant deux orifices circulaires coaxiaux dans lesquels s'engagent, avec étanchéité, les deux extrémités respectives d'un tube en un matériau diélectrique 25 dont le diamètre intérieur est légèrement plus grand que le diamètre de la cigarette ; la paroi circulaire supérieure 23 est conformée de manière à s'assembler avec étanchéité sur la partie épaulée 12 du tube 9 en délimitant, en aval de l'iris 19, une chambre d'écoulement dans laquelle débouche le canal 13 ; la face circulaire inférieure 24 du boîtier porte un manchon de fixation 26 coaxial cylindrique de diamètre supérieur à celui du tube 25 ;
c) une troisième partie 8 consistant en un tronçon de tube épaulé dans sa partie inférieure, ce tronçon de tube 27 comprenant un passage central cylindrique à différents niveaux d'alésage, à savoir : un premier niveau de diamètre correspondant au diamètre extérieur du manchon 26 dans lequel il vient s'emboîter avec étanchéité, un deuxième niveau d'alésage sur lequel est monté un premier sphincter 28 qui, à l'état relâché, vient encapsuler la cigarette, au niveau de l'extrémité supérieure du filtre 4, un troisième niveau d'alésage qui délimite une cavité 29 entourant la zone de ventilation 5 du filtre 4 et dans laquelle débouche un conduit d'écoulement de gaz 30 dont le débit QF détermine le débit de ventilation du filtre 4, et un quatrième niveau d'alésage dans lequel est monté un deuxième sphincter 31 qui, à l'état déployé sous l'effet d'un gaz sous pression, vient encapsuler l'extrémité inférieure du filtre 4 de la cigarette : comme précédemment mentionné, ce sphincter 31 permet de maintenir la cigarette en encapsulant, sur une longueur normalisée de 9 mm, l'extrémité filtre pour les mesures de tirage et de ventilation.

Le fonctionnement du porte-échantillon précédemment décrit est alors le suivant :

Dans un premier temps, on procède à l'engagement d'une cigarette dans le porte-échantillon 1. Au cours de cet engagement, qui s'effectue par simple gravité, la cigarette, centrée par la trémie 14, s'engage (filtre orienté vers le bas) dans le passage délimité notamment par la portion cylindrique 18, le tube cylindrique 25 et les deux sphincters 28, 31 qui, avec l'iris 19, se trouvent alors à l'état rétracté provoqué par aspiration. Des moyens de butée escamotables permettent alors de maintenir la cigarette engagée dans le porte-échantillon 2, position dans laquelle l'extrémité inférieure du filtre 4 se trouve sensiblement au niveau de l'extrémité inférieure du sphincter 31, tandis que l'extrémité supérieure de la colonne de tabac 2 se trouve légèrement au-dessus de l'iris 19.

Les sphincters 28, 31 et l'iris 19 sont alors mis à la pression atmosphérique et passent à l'état déployé de manière à ce que :
- l'iris 19 sépare de l'atmosphère le haut de la colonne de tabac 2,
- le sphincter 28 sépare la partie filtre 4 de la colonne de tabac 2,
- le sphincter 31 maintient la cigarette en encapsulant l'extrémité du filtre 4 sur une longueur de 9 mm.

Le porte-échantillon 1 est alors prêt à exécuter sa séquence de mesures, à savoir :
- une première mesure d'humidité par application et analyse de signaux hyperfréquence dans la cavité C,
- une mesure de tirage normalisé en provoquant un débit d'aspiration de 17,5 ml/s, au niveau de l'extrémité inférieure du filtre 4, les canaux d'écoulement de l'air aspiré étant mis à l'atmosphère : cette mesure consiste à mesurer, au moyen d'un capteur de pression, la perte de charge engendrée par la cigarette,
- une mesure de la ventilation filtre grâce à la détermination, au moyen d'un premier détecteur de débit D₁, du débit d'air QF passant par le canal 30,
- une mesure de la ventilation papier par la mesure, grâce à un détecteur de débit D₂, du débit passant par le canal 13,
- la mesure du tirage, au travers de la cigarette, ventilation filtre fermé, grâce au capteur de pression ΔP, le canal 30 étant fermé au moyen d'une vanne commandable V_{2,}
- une nouvelle mesure de l'humidité par un processeur MP similaire à la précédente.

Bien entendu, ces différentes mesures peuvent être pilotées par un processeur MP qui effectue en outre un stockage en mémoire des valeurs mesurées ainsi qu'un traitement de ces valeurs.

Dans cet exemple, ce microprocesseur commande également :
- une vanne V₁ d'obturation du passage de la cigarette au poste subséquent, en principe le poste de mesure du diamètre de la cigarette et de la compacité,
- une vanne V₃ commandant la fermeture de la mise à l'atmosphère du canal 19.

Un avantage important de cette solution consiste en ce que l'intégration de la cavité de mesure d'humidité dans le module de tirage permet, avec un seul capteur d'humidité, de mesurer l'humidité avant tirage pour la correction du poids et l'humidité après tirage pour la correction de compacité.

## Revendications

1. Porte-échantillon pour la mesure de paramètres d'objets poreux, ce porte-échantillon (1) comportant une cellule de mesure de tirage,
**caractérisé en ce qu'**il comprend une cavité hyperfréquence de mesure d'humidité (C) intégrée à la cellule de manière à entourer l'objet présent dans ladite cellule sur au moins une partie de sa hauteur, ladite cavité étant séparée dudit objet par un tube en matériau diélectrique (25) qui entoure ledit objet, ledit tube s'étendant de préférence sur ladite partie de la hauteur.

2. Porte-échantillon selon la revendication 1 destiné à la mesure des paramètres d'une cigarette comportant une colonne de tabac (2) enveloppée dans du papier à cigarette (3) ainsi qu'un filtre,
**caractérisé en ce qu'**il comprend un corps tubulaire comportant :
- un orifice d'accès muni d'un iris (19) permettant de séparer de l'atmosphère le haut de la colonne de tabac (2), afin de canaliser le débit de ventilation du papier en vue de sa mesure grâce à des premiers moyens de mesure de débit (D₂) appropriés,
- une cavité (C) entourant la colonne de tabac (2) sur au moins une fraction de sa hauteur, de manière à permettre la détermination du taux d'humidité du tabac par analyse de signaux hyperfréquence, cette cavité comprenant une paroi de préférence cylindrique (22) partiellement refermée par deux parois (23, 24) comportant deux orifices circulaires coaxiaux dans lesquels s'engagent, avec étanchéité, les deux extrémités respectives d'un tube en un matériau diélectrique (25) dont le diamètre intérieur est légèrement plus grand que le diamètre de ladite cigarette, et,
- au moins un premier sphincter (31) permettant de maintenir la cigarette en encapsulant l'extrémité du filtre (4), afin d'effectuer les mesures de tirage grâce à des moyens d'aspiration (ASP) associés audit sphincter (31) et à des second moyens de mesure de pression (ΔP),
la distance entre l'iris (19) et l'extrémité inférieure du sphincter (31) étant légèrement inférieure à la longueur d'une cigarette.

3. Porte-échantillon selon la revendication 2,
**caractérisé en ce qu'**il comprend un second sphincter (28) permettant d'encapsuler le filtre (4) à l'opposé du premier sphincter (31) par rapport à une zone de ventilation (5) du filtre (4), de manière à canaliser le débit de ventilation (QF) du filtre (4) en vue de sa mesure.

4. Porte-échantillon selon l'une des revendications précédentes,
**caractérisé en ce qu'**il comprend un processeur (MP) apte à commander une séquence opératoire comprenant successivement les mesures :
- de l'humidité avant tirage,
- du tirage normalisé (TN),
- de la ventilation filtre (VF),
- de la ventilation papier (VP),
- du tirage avec ventilation filtre fermé (TFE),
- de l'humidité après tirage.

5. Porte-échantillon selon la revendication 4,
**caractérisé en ce qu'**il comprend, d'une part, une structure cylindrique réalisée en trois parties tubulaires assemblées les unes aux autres, à savoir :
- une première partie comprenant une trémie (14) dont la cavité centrale coaxiale comporte une partie tronconique (17) suivie d'une partie cylindrique (18), sensiblement au diamètre de la cigarette, la partie inférieure de cette trémie (14) comprenant un iris (19),
- une deuxième partie consistant en une cavité hyperfréquence (C), cette partie comportant un boîtier cylindrique dont les deux parois circulaires (23, 24) comportent deux orifice circulaires coaxiaux dans lesquels s'engagent avec étanchéité les deux extrémités respectives d'un tube (25) en matériau diélectrique dont le diamètre intérieur est légèrement plus grand que le diamètre de la cigarette,
- une troisième partie comprenant un passage central cylindrique à plusieurs niveaux d'alésage portant un premier sphincter (28) destiné à encapsuler la cigarette, au niveau de l'extrémité supérieure du filtre (4) et un deuxième sphincter (31) destiné à encapsuler l'extrémité inférieure du filtre (4),
et, d'autre part :
- des moyens d'aspiration (ASP) connectés en aval du deuxième sphincter (31), ces moyens d'aspiration (ASP) comprenant des moyens de mesure (D₁) du débit d'air aspiré (QT),
- un premier conduit d'écoulement d'air (13) débouchant dans une chambre située dans l'intervalle entre la première et la seconde partie pour canaliser et mesurer le débit (QP) de ventilation papier,
- un deuxième conduit d'écoulement d'air (30) débouchant dans une chambre (29) située dans l'intervalle des deux sphincters (28, 31) pour canaliser et mesurer le débit (QF) de ventilation filtre.

## Patentansprüche

1. Probenträger zur Messung von Parametern von porösen Objekten, wobei der Probenträger (1) eine Zelle zur Messung des Zuges umfasst,
**dadurch gekennzeichnet, dass** er eine Mikrowellenkammer zur Messung der Feuchte (C) umfasst, die so in die Zelle eingebaut ist, dass sie das Objekt, das in der Zelle vorhanden ist, auf mindestens einem Teil seiner Höhe umschließt, wobei die Kammer von dem Objekt durch ein Rohr aus dielektrischem Material (25) abgetrennt ist, welches das Objekt umschließt, wobei sich das Rohr vorzugsweise über den Teil der Höhe erstreckt.

2. Probenträger nach Anspruch 1 zur Messung der Parameter einer Zigarette, umfassend eine in Zigarettenpapier (3) eingehüllt Tabaksäule (2), sowie einen Filter,
**dadurch gekennzeichnet, dass** er einen rohrförmigen Körper umfasst, umfassend:
- eine mit einer Blende (19) versehene Zugangsöffnung, durch die sich die Höhe der Tabaksäule (2) von der Atmosphäre abtrennen lässt, um die Zuluftmenge des Papiers im Hinblick auf seine Messung durch erste entsprechende Mengen-Messmittel (D2) zu kanalisieren,
- eine Kammer (C), die die Tabaksäule (2) auf mindestens einem Bruchteil seiner Höhe so umschließt, dass sich der Feuchtegehalt des Tabaks durch Mikrowellen-Signalanalyse bestimmen lässt, wobei diese Kammer eine vorzugsweise zylindrische Wand (22) umfasst, die zum Teil von zwei Wänden (23, 24) verschlossen ist, umfassend zwei koaxiale, kreisförmige Öffnungen, in die jeweils die beiden Enden eines Rohrs aus dielektrischem Material (25) dicht eingreifen, dessen Innendurchmesser etwas größer ist als der Durchmesser der Zigarette, und
- mindestens einen ersten Sphinkter (31), durch den sich die Zigarette unter Verkapselung des Ende des Filters (4) halten lässt, um die Zugmessungen mit Ansaugmitteln (ASP), die mit dem Sphinkter (31) verbunden sind, und zweiten Mitteln zur Druckmessung (ΔP) durchzuführen,
- wobei der Abstand zwischen der Blende (19) und dem unteren Ende des Sphinkters (31) etwas kleiner ist als die Länge einer Zigarette.

3. Probenträger nach Anspruch 2,
**dadurch gekennzeichnet, dass** er einen zweiten Sphinkter (28) umfasst, durch den sich der Filter (4) gegenüber vom dem ersten Sphinkter (31) bezüglich einer Belüftungszone (5) des Filters (4) so verkapseln lässt, dass die Zuluftmenge (QF) des Filters (4) in Hinblick auf seine Messung kanalisiert wird.

4. Probenträger nach einem der vorhergehenden Ansprüche,
**dadurch gekennzeichnet, dass** er einen Prozessor (MP) umfasst, der dazu ausgelegt ist, einen Betriebsablauf vorzugeben, umfassend aufeinanderfolgend die Messungen:
- der Feuchte vor den Zug,
- des Norm-Zugs (TN),
- der Filterbelüftung (VF),
- der Papierbelüftung (VP),
- des Zugs mit geschlossener Filterbelüftung (TFE),
- der Feuchte nach dem Zug.

5. Probenträger nach Anspruch 4,
**dadurch gekennzeichnet, dass** er einerseits eine zylindrische Struktur umfasst, die ist aus drei rohrförmigen, ineinandergefügten Teilen realisiert ist, nämlich:
- einem ersten Teil, umfassend einen Trichter (14), dessen koaxialer zentraler Hohlraum einen kegelförmigen Teil (17) umfasst, an den sich ein zylindrischer Teil (18), im Wesentlichen mit dem Durchmesser der Zigarette anschließt, wobei der untere Teil dieses Trichters (14) eine Blende (19) umfasst,
- einem zweiten Teil, bestehend aus einer Mikrowellenkammer (C), wobei dieser Teil ein zylindrisches Gehäuse umfasst, wovon die beiden kreisförmigen Wände (23, 24) zwei koaxiale kreisförmige Öffnungen umfassen, in die die beiden jeweiligen Enden eines Rohrs (25) aus dielektrischem Material dicht eingreifen, dessen Innendurchmesser etwas größer ist als der Durchmesser der Zigarette,
- einem dritten Teil, umfassend einen zentralen zylindrischen Durchgang mit mehreren Bohrungsniveaus, die einen ersten Sphinkter (28), der dazu bestimmt ist, die Zigarette am oberen Endes des Filters (4) zu verkapseln, und einen zweiten Sphinkter (31), der dazu bestimmt ist, das untere Ende des Filters (4) zu verkapseln, tragen,
und weiterhin umfasst:
- Ansaugmittel (ASP), die nachgeschaltet zum zweiten Sphinkter (31) angeschlossen sind, wobei dieses Ansaugmittel (ASP) Messmittel (D₁) der angesaugten Luftmenge (QT) umfassen,
- eine erste Luftströmungsleitung (13), die in einer Kammer endet, die im Zwischenraum zwischen dem ersten und dem zweiten Teil angeordnet ist, um die Papier-Zuluftmenge (QP) zu kanalisieren und zu messen,
- eine zweite Luftströmungsleitung (30), die in einer Kammer (29) endet, die im Zwischenraum der beiden Sphinkter (28, 31) endet, um die Filter-Zuluftmenge (QF) zu kanalisieren und zu messen.

## Claims

1. Sample-holder for measuring parameters of porous objects, this sample-holder (1) comprising a cell for measuring draft,
**characterised in that** it comprises a microwave frequency cavity for measuring moisture (C) integrated into the cell in such a way as to surround the object present in said cell over at least one portion of its height, said cavity being separated from said object by a tube made of dielectric material (25) which surrounds said object, said tube extending more preferably over said portion of the height.

2. Sample-holder according to claim 1 intended for measuring the parameters of a cigarette comprising a tobacco column (2) wrapped in cigarette paper (3) as well as a filter,
**characterised in that** it comprises a tubular body comprising:
- an access orifice provided with an iris (19) making it possible to separate the top of the tobacco column (2) from the atmosphere, in order to channel the ventilation rate of the paper for the purposes of measuring it thanks to first suitable means for rate measurement (D₂),
- a cavity (C) surrounding the tobacco column (2) over at least one fraction of its height, in such a way as to allow for the determination of the moisture content of the tobacco through analysis of microwave signals, this cavity comprising a more preferably cylindrical wall (22) partially closed by two walls (23, 24) comprising two coaxial circular orifices wherein are engaged, with a seal, the two respective ends of a tube made of dielectric material (25), the inner diameter of which being slightly larger than the diameter of said cigarette, and,
- at least one first sphincter (31) making it possible to maintain the cigarette by encapsulating the end of the filter (4), in order to carry out the draft measurements thanks to means of suction (ASP) associated with said sphincter (31) and to second means for measuring pressure (ΔP),
with the distance between the iris (19) and the lower end of the sphincter (31) being slightly less than the length of a cigarette.

3. Sample-holder according to claim 2,
**characterised in that** it comprises a second sphincter (28) making it possible to encapsulate the filter (4) opposite the first sphincter (31) in relation to a ventilation zone (5) of the filter (4), in such a way as to channel the ventilation rate (QF) of the filter (4) for the purposes of measuring it.

4. Sample-holder according to one of the preceding claims, **characterised in that** it comprises a processor (MP) able to control an operating sequence comprising successively the measurements:
- of the moisture before draft,
- of the standardised draft (TN),
- of the filter ventilation (VF),
- of the paper ventilation (VP),
- of the draft with filter ventilation closed (TFE),
- of the moisture after draft.

5. Sample-holder according to claim 4,
**characterised in that** it comprises, on the one hand, a cylindrical structure made of three tubular portions assembled together, i.e.:
- a first portion comprising a hopper (14) of which the central coaxial cavity comprises a tapered portion (17) followed by a cylindrical portion (18), substantially with the diameter of the cigarette, with the lower portion of this hopper (14) comprising an iris (19),
- a second portion consisting of a microwave frequency cavity (C), this portion comprising a cylindrical case of which the two circular walls (23, 24) comprise two coaxial circular orifices in which are engaged with a seal the two respective ends of a tube (25) made of dielectric material of which the inner diameter is slightly larger than the diameter of the cigarette,
- a third portion comprising a cylindrical central passage with several levels of bores carrying a first sphincter (28) intended to encapsulate the cigarette, on the upper end of the filter (4) and a second sphincter (31) intended to encapsulate the lower end of the filter (4),
and, on the other hand:
- means of suction (ASP) connected downstream of the second sphincter (31), with these means of suction (ASP) comprising means for measuring (D₁) the rate of air sucked (QT),
- a first airflow duct (13) opening into a chamber located in the interval between the first and the second portion to channel and measure the paper ventilation rate (QP),
- a second airflow duct (30) opening into a chamber (29) located in the interval of the two sphincters (28, 31) to channel and measure the filter ventilation rate (QF).
